(19)

Europäisches
Patentamt

European
Patent Office

Office européen
des brevets

(11) **EP 2 775 645 A1**

(12) **EUROPEAN PATENT APPLICATION**
published in accordance with Art. 153(4) EPC

(43) Date of publication:
**10.09.2014 Bulletin 2014/37**

(51) Int Cl.:
*H04J 99/00* [(2009.01)]     *H04B 7/02* [(2006.01)]
*H04B 7/04* [(2006.01)]     *H04J 11/00* [(2006.01)]

(21) Application number: **12845078.0**

(22) Date of filing: **02.11.2012**

(86) International application number:
**PCT/JP2012/078471**

(87) International publication number:
**WO 2013/065822 (10.05.2013 Gazette 2013/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2011 JP 2011242917**

(71) Applicant: **NTT DOCOMO, INC.**
**Chiyoda-ku**
**Tokyo 100-6150 (JP)**

(72) Inventors:
• **SAGAE, Yuta**
  **Tokyo 100-6150 (JP)**
• **OHWATARI, Yusuke**
  **Tokyo 100-6150 (JP)**
• **MIKI, Nobuhiko**
  **Tokyo 100-6150 (JP)**

(74) Representative: **HOFFMANN EITLE**
**Patent- und Rechtsanwälte**
**Arabellastrasse 4**
**81925 München (DE)**

(54) **RECEIVER**

(57) Appropriate reception processing is performed using a CRS-based estimation method for a covariance matrix $R_{I+N}$. An IRC receiver 10 according to the present invention includes: a covariance matrix estimation unit 12/13 configured to estimate a covariance matrix $R_{I+N}$ based on a CRS; a missing element insertion unit 14 configured to insert a given value into an inestimable element in an interference-signal covariance matrix $R_{I+N}$ ("~" is on R) of interference signal components contained in the estimated covariance matrix $R_{I+N}$; an IRC reception weight generation unit 16 configured to generate an IRC reception weight $W_{IRC}$ by using the control signal and the covariance matrix $R_{I+N}$ having the given value inserted thereinto; and a signal separation unit 17 configured to separate the data signal from a received signal by using the generated reception weight and the control signal.

FIG. 1

## Description

## TECHNICAL FIELD

The present invention relates to a receiver.

## BACKGROUND ART

In LTE (Long Term Evolution), an IRC (Interference Rejection Combining) receiver configured to suppress interfering beams of other mobile stations UE is discussed as one of methods for improving cell-edge throughput in downlink.

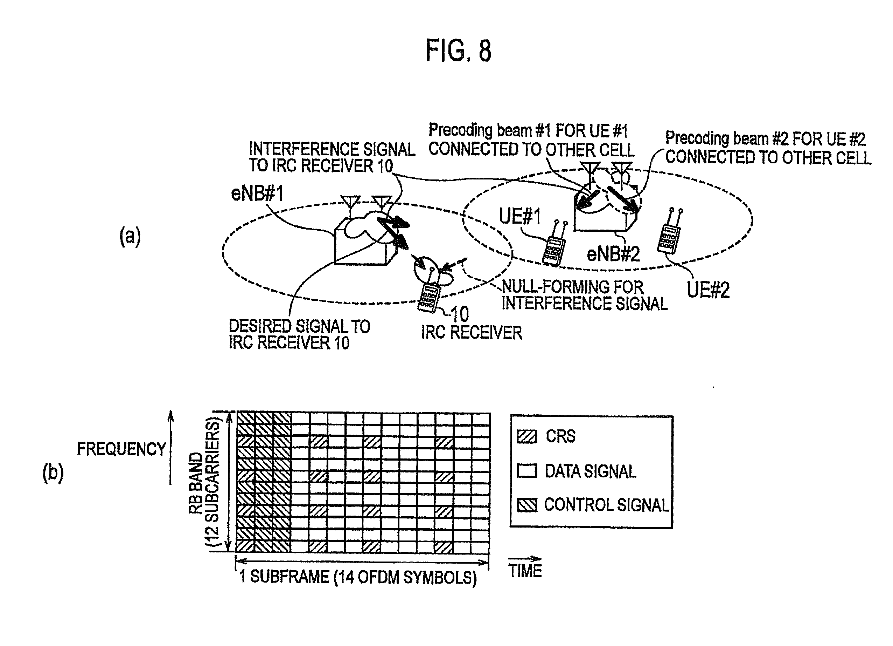

As shown in Fig. 8(a), an IRC receiver 10 aims to improve the received quality of a desired signal by suppressing interference signals.

Further, LTE (Release-8) is configured such that a CRS (Cell-Specific Reference Signal) is transmitted to perform estimation of a channel state (CSI: Channel State Information), demodulation of data signals and control signals, and measurement of received quality in a cell.

More specifically, LTE (Release-8) is configured such that the CRSs are transmitted along with data signals and control signals in a format shown in Fig. 8(b). Note that the CRS can be set for up to four antennas.

Further, LTE is configured to use an SFBC (Space Frequency Block Coding) scheme as a transmission diversity scheme.

The SFBC scheme is configured to use "Alamouti coding" which can achieve the maximum diversity gain at a symbol level equivalent to maximum ratio combining. Specifically, the SFBC scheme is configured to perform coding by using two resource elements (RE) in a frequency direction. These two resource elements are referred to as an "SFBC pair" herein.

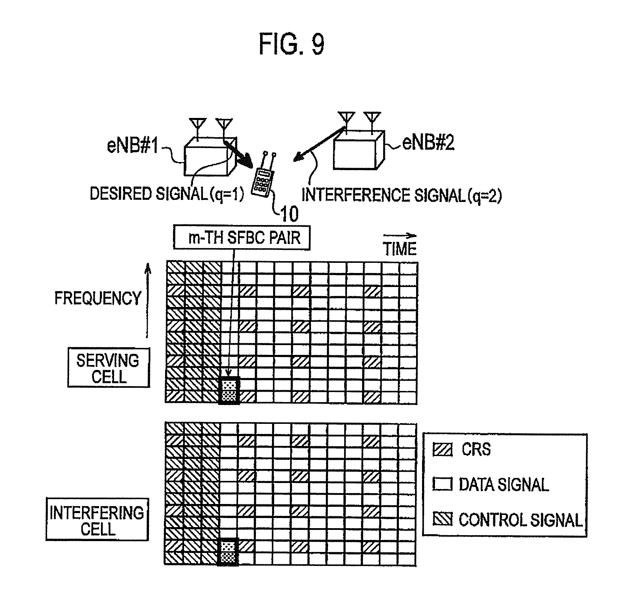

A description is given below of a reception signal model for the IRC receiver 10 in a case where, as shown in Fig. 9, the IRC receiver 10 receives a desired signal from a cell 1 (q=1) and receives an interference signal from a cell 2 (q=2), the model ignoring channel fluctuations.

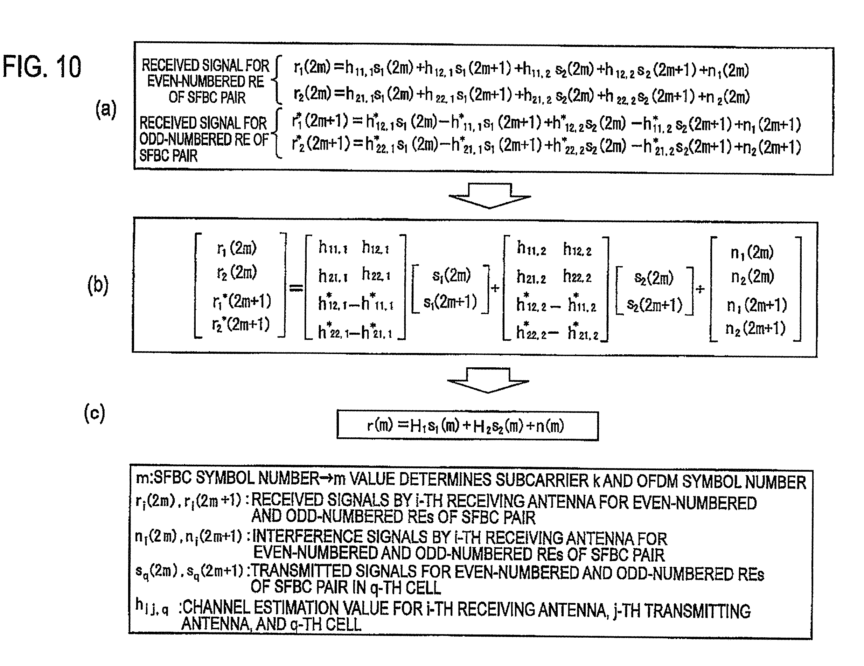

Specifically, formulae shown in Figs. 10(a) to 10(c) can express a reception signal $r_1$ (2m) by a receiving antenna 1 (i=1) of the IRC receiver 10 in the even-numbered resource element of an SFBC pair m, a reception signal $r_2$ (2m) by a receiving antenna 2 (i=2) of the IRC receiver 10 in the even-numbered resource element of the SFBC pair m, a reception signal $r_1^*$ (2m+1) by the receiving antenna 1 (i=1) of the IRC receiver 10 in the odd-numbered resource element of the SFBC pair m, and a reception signal $r_2^*$ (2m+1) by the receiving antenna 2 (i=2) of the IRC receiver 10 in the odd-numbered resource element of the SFBC pair m. Note that * denotes a complex conjugate.

Meanwhile, a technique for performing reception processing by using an MMSE (Minimum Mean Square Error) spatial filtering scheme is conventionally known for interference suppression.

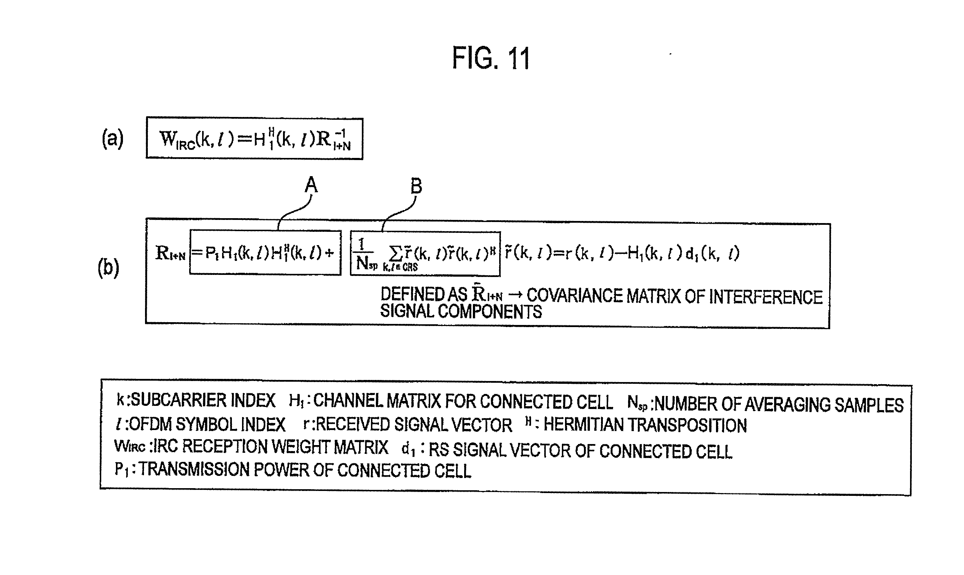

This technique is configured to generate an IRC reception weight $W_{IRC}$ (k,l), as shown in Fig. 11(a). To generate the IRC reception weight $W_{IRC}$ (k,l), a CRS-based estimation method for a covariance matrix $R_{I+N}$ shown in Fig. 11(b) is used (see

Non-patent document 1).

As shown in Fig. 11(b), the covariance matrix $R_{I+N}$ includes a desired-signal covariance matrix A of desired signal components and an interference-signal covariance matrix B of interference signal components (noise signal components). Hereinbelow, the interference-signal covariance matrix B is expressed as:

[Expression 1]

$$\tilde{R}_{I+N}\Big|.$$

PRIOR ART DOCUMENT

NON-PATENT DOCUMENT

Non-patent document 1: 3GPP contribution R4-115213

## SUMMARY OF THE INVENTION

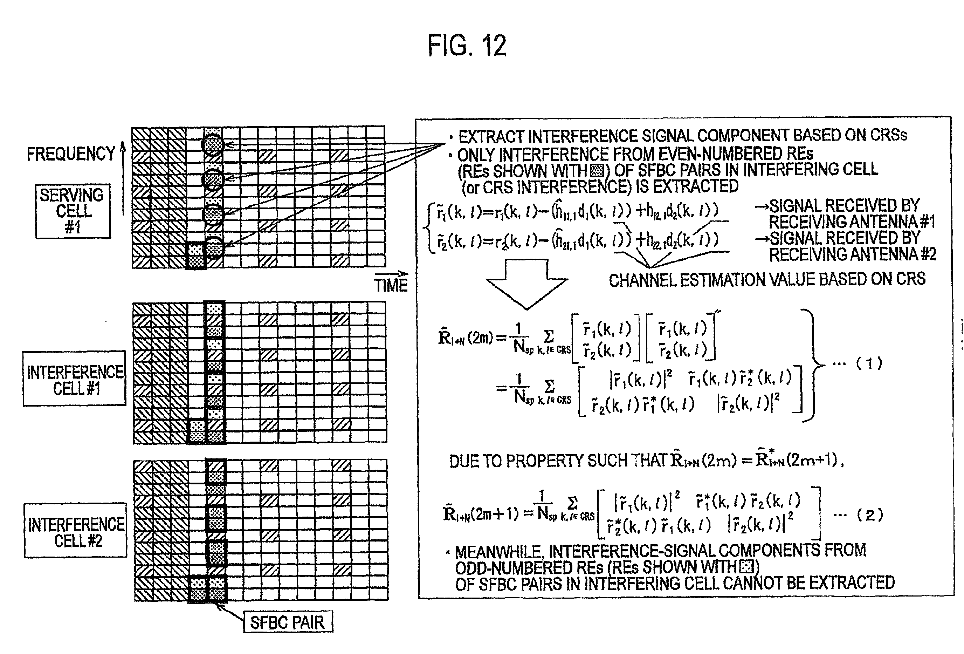

However, as shown in Fig. 12, based on the CRSs transmitted in a serving cell (cell 1), the IRC receiver 10 can extract only interference from the even-numbered resource element of the SFBC pair in an interference cell #1/#2, i.e., cannot extract solely interference from the odd-numbered resource element of the SFBC pair in the interference cell #1/#2.

Specifically, an interference-signal-component covariance matrix for the even-numbered resource element of the SFBC pair is expressed by Formula (1) shown in Fig. 12 as:

[Expression 2]

$$\tilde{R}_{I+N}(2m)\Big|,$$

and an interference-signal-component covariance matrix for the odd-numbered resource element of the SFBC pair is expressed by Formula (2) shown in Fig. 12 as:

[Expression 3]

$$\tilde{R}_{I+N}(2m+1)\Big|.$$

Then, by using Formulae (1) and (2) shown in Fig. 12, an interference-signal-component covariance matrix is expressed as:

[Expression 4]

$$\tilde{R}_{I+N} \bigg|,$$

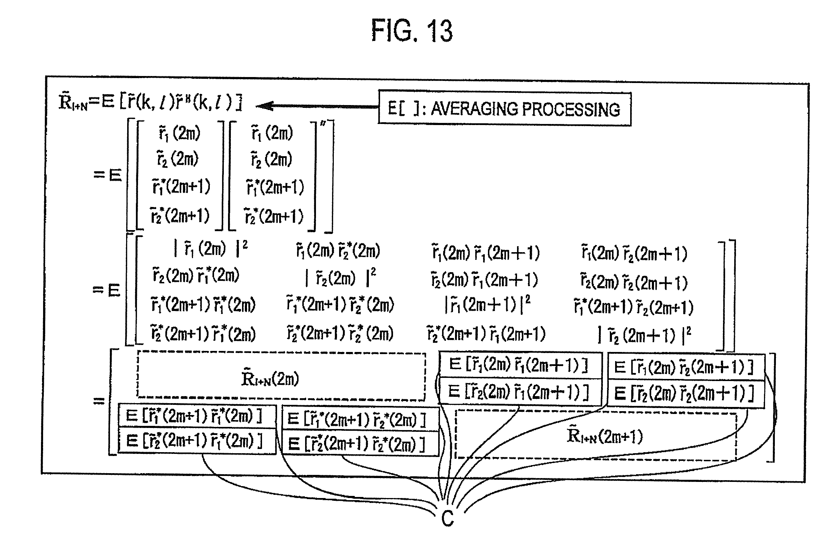

as shown in Fig. 13. In such a case, each element C in Fig. 13 is either a covariance value between different resource elements of an SFBC pair or is a covariance value between different resource elements of the SFBC pair at different receiving antennas. Thus, the element C cannot be obtained by the CRS-based estimation method for the covariance matrix $R_{I+N}$.

This problem leads to a problem where the IRC reception weight cannot be appropriately generated, hindering appropriate reception processing.

The present invention has been made in view of the above problems, and has an objective of providing a receiver capable of performing appropriate reception processing by using a CRS-based estimation method for the covariance matrix $R_{I+N}$.

A first feature of the present invention is summarized as a receiver configured to receive a data signal, a control signal, and a cell-specific reference signal transmitted using a space frequency block coding scheme, the receiver including: a covariance matrix estimation unit configured to estimate a covariance matrix based on the cell-specific reference signal; a missing element insertion unit configured to insert a given value into an inestimable element in an interference-signal covariance matrix of interference signal components contained in the estimated covariance matrix; a reception weight generation unit configured to generate a reception weight by using the control signal and the covariance matrix having the given value inserted thereinto; and a signal separation unit configured to separate the data signal from a received signal by using the control signal and the generated reception weight.

**BRIEF DESCRIPTION OF THE DRAWINGS**

[Fig. 1] Fig. 1 is a functional block diagram of an IRC receiver according to a first embodiment of the present invention.
[Fig. 2] Fig. 2 is a diagram illustrating a method for calculating a covariance matrix, by the IRC receiver according to the first embodiment of the present invention.
[Fig. 3] Fig. 3 is a functional block diagram of an IRC receiver according to Modification 1 of the present invention.

[Fig. 4] Fig. 4 is a diagram illustrating a method for calculating a covariance matrix, by the IRC receiver according to Modification 1 of the present invention.
[Fig. 5] Fig. 5 is a diagram illustrating a method for calculating a covariance matrix, by the IRC receiver according to Modification 1 of the present invention.
[Fig. 6] Fig. 6 is a functional block diagram of an IRC receiver according to Modification 2 of the present invention.
[Fig. 7] Fig. 7 is a diagram illustrating a method for calculating a covariance matrix, by the IRC receiver according to Modification 2 of the present invention.
[Fig. 8] Fig. 8 is a diagram illustrating a prior art.
[Fig. 9] Fig. 9 is a diagram illustrating a prior art.
[Fig. 10] Fig. 10 is a diagram illustrating a prior art.
[Fig. 11] Fig. 11 is a diagram illustrating a prior art.
[Fig. 12] Fig. 12 is a diagram illustrating a prior art.
[Fig. 13] Fig. 13 is a diagram illustrating a prior art.

**MODE FOR CARRYING OUT THE INVENTION**

(Mobile Communication System according to the First Embodiment of the Present Invention)

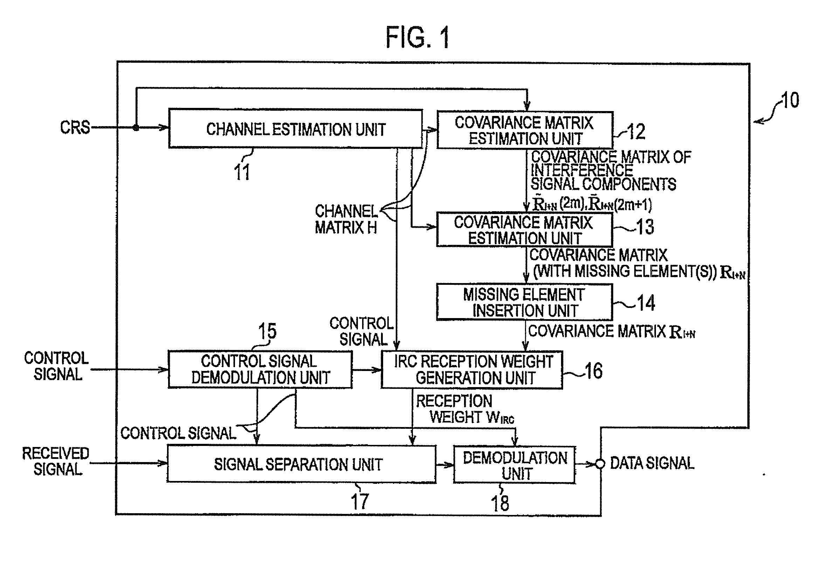

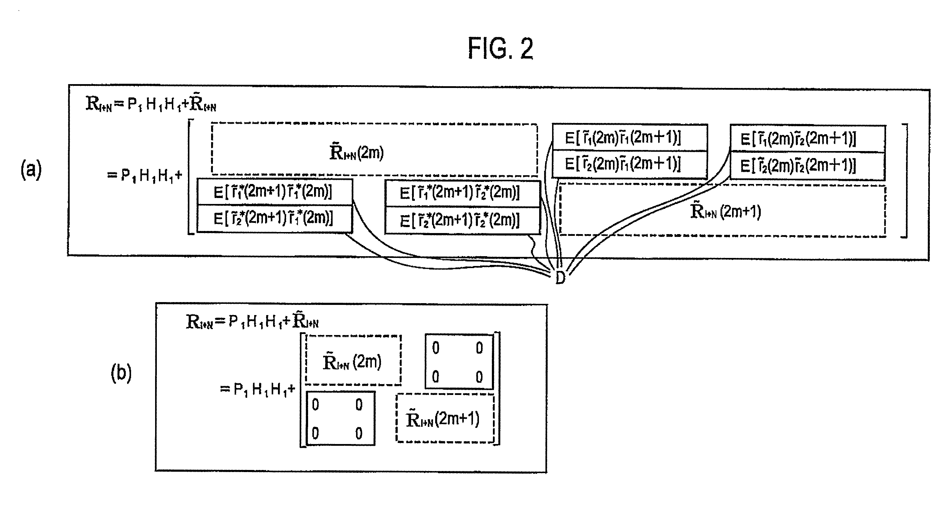

With reference to Figs. 1 and 2, an IRC receiver 10 according to a first embodiment of the present invention is described.

As shown in Fig. 1, the IRC receiver 10 according to the present embodiment includes a channel estimation unit 11, a covariance matrix estimation unit 12, a covariance matrix estimation unit 13, a missing element insertion unit 14, a control signal demodulation unit 15, an IRC reception weight generation unit 16, a signal separation unit 17, and a demodulation unit 18.

The channel estimation unit 11 is configured to estimate (calculate) a channel matrix H by performing channel estimation processing based on CRSs received from a serving cell (a cell 1) .

The covariance matrix estimation unit 12 is configured to estimate (calculate) an interference signal component covariance matrix:

[Expression 5]

$$\tilde{R}_{I+N}$$

based on the CRSs received from the serving cell (cell 1) and the channel matrix H received from the channel estimation 11.

The covariance matrix estimation unit 13 is configured to estimate (calculate) a covariance matrix $R_{I+N}$ based on the channel matrix H received from the channel estimation unit 11 and the interference signal component covariance matrix:

[Expression 6]

$$\tilde{R}_{I+N}$$

received from the covariance matrix estimation unit 12, as shown in Fig. 2(a).

Each element D (missing element) shown in Fig. 2 (a) is, as described earlier, either a covariance value between different resource elements of an SFBC pair or a covariance value between different resource elements of the SFBC pair at different receiving antennas. Thus, the element D cannot be obtained by the CRS-based estimation method for the covariance matrix $R_{I+N}$.

However, since the elements D do not contain a desired signal component from the serving cell (cell 1), all the values of the element D are supposedly small values.

Thus, the missing element insertion unit 14 is, as shown in Fig. 2(b), configured to insert a fixed value "0" as a given value, into all the elements D in the covariance matrix $R_{I+N}$ received from the covariance matrix estimation unit 13.

The control signal demodulation unit 15 is configured to perform demodulation processing on a control signal received from the serving cell (cell 1).

The IRC reception weight generation unit 16 is configured to generate an IRC reception weight $W_{IRC}$ based on the channel matrix H received from the channel estimation unit 11, the control signal received from the control signal demodulation unit 15, and the covariance matrix $R_{I+N}$ received from the missing element insertion unit 14 (the covariance matrix $R_{I+N}$ having "0" inserted into the elements D).

Specifically, the IRC reception weight generation unit 16 is configured to generate the IRC reception weight $W_{IRC}$ by assigning the channel matrix H received from the channel estimation unit 11 and the covariance matrix $R_{I+N}$ received from the missing element insertion unit 14 to the formula shown in Fig. 11(a).

The signal separation unit 17 is configured to perform signal separation processing on a received signal from the serving cell (cell 1), based on the control signal received from the control signal demodulation unit 15 and the IRC reception weight $W_{IRC}$ received from the IRC reception weight generation unit 16.

The demodulation unit 18 is configured to output a data signal by performing demodulation processing on a signal received from the signal separation unit 17, based on the control signal received from the control signal demodulation unit 15 and the IRC reception weight $W_{IRC}$ received from the IRC reception weight generation unit 16.

In the mobile communication system according to the present embodiment, the fixed value "0" is inserted as a given value into an inestimable element in the interference-signal covariance matrix:

[Expression 7]

$$\tilde{R}_{I+N}.$$

Thus, appropriate reception processing can be performed by use of the CRS-based estimation method for the covariance matrix $R_{I+N}$.

(Modification 1)

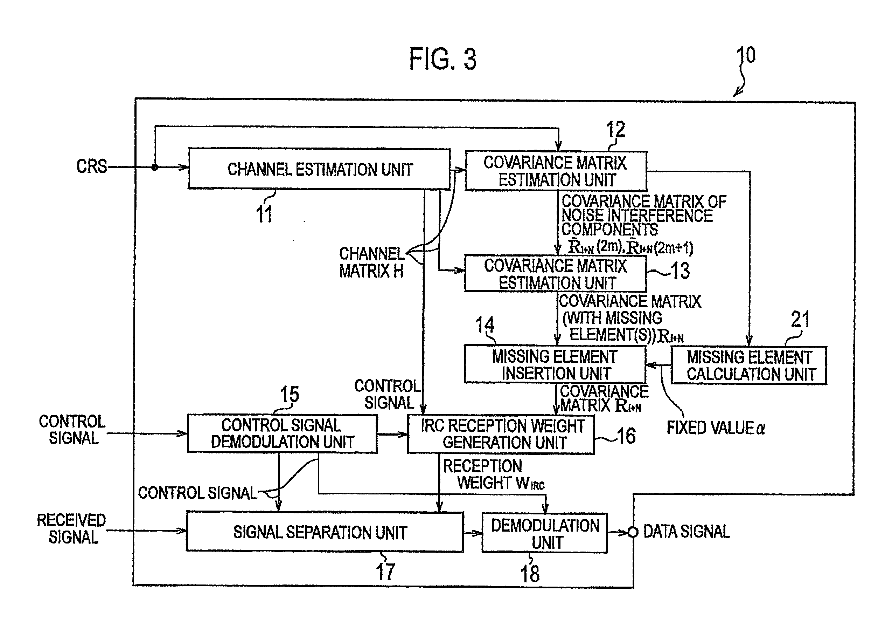

With reference to Figs. 3 to 5, an IRC receiver 10 according to Modification 1 of the present invention is described. The IRC receiver 10 according to Modification 1 is described below, with a focus on differences from the IRC receiver 10 according to the first embodiment.

As shown in Fig. 3, the IRC receiver 10 according to Modification 1 includes a missing element calculation unit 21 in addition to the configuration shown in Fig. 1.

The missing element calculation unit 21 is configured to calculate a given value to be inserted into each inestimable element D in the interference-signal covariance matrix:

[Expression 8]

$$\tilde{R}_{I+N}.$$

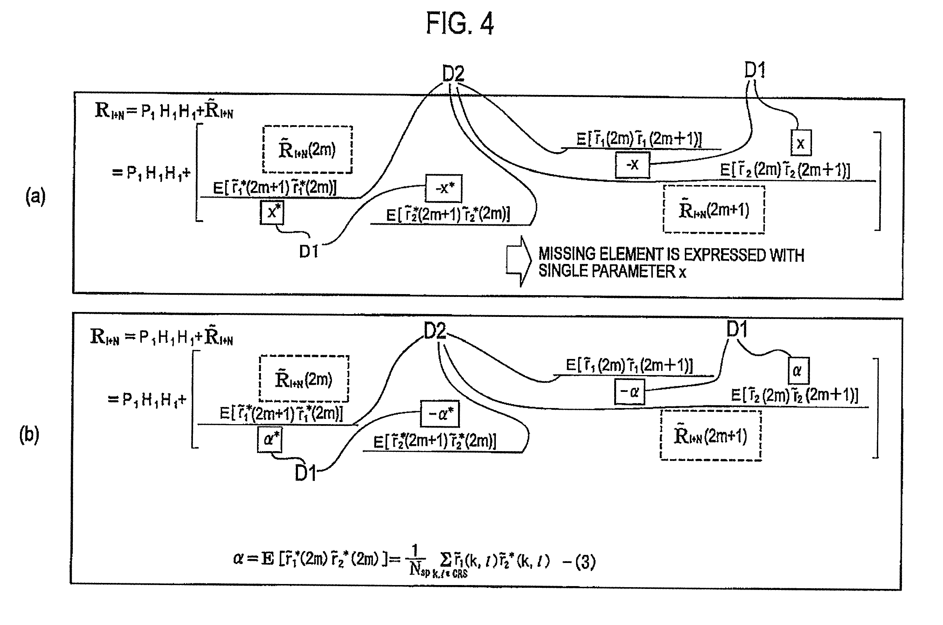

For example, focusing on that an element D1 in the element D can be expressed as a single parameter x as shown in Fig. 4(a), the missing element calculation unit 21 may be configured to use Formula (3) shown in Fig. 4(b) to calculate a given value $\alpha$ (=x) to be inserted into the element D1. Specifically, the missing element calculation unit 21 may be configured to calculate the given value $\alpha$ (=x) to be inserted into the element D1 by using an element of an off-diagonal term in the calculated interference-signal covariance matrix:

[Expression 9]

$$\tilde{R}_{I+N}(2m)|.$$

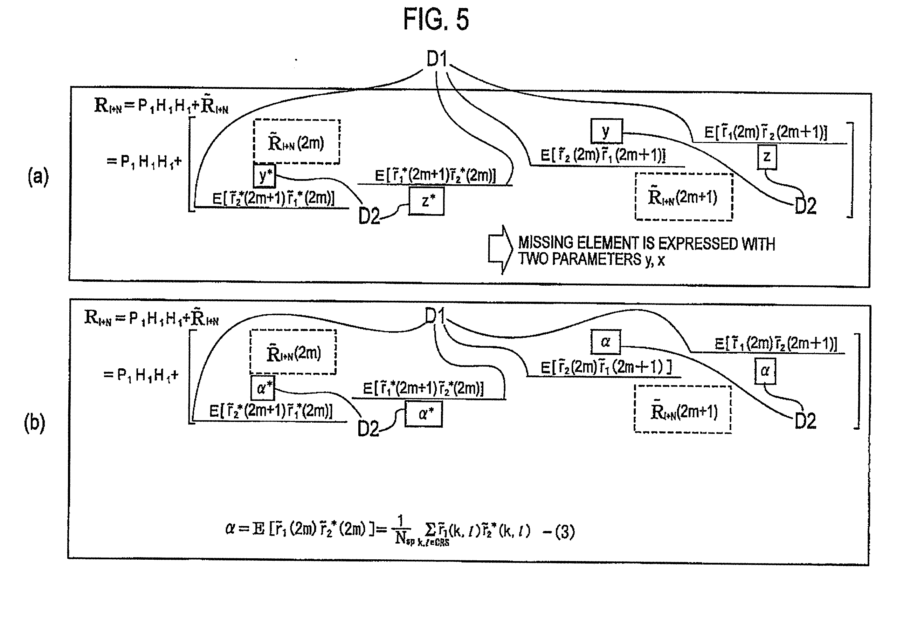

Alternatively, focusing on that an element D2 in the element D can be expressed as two parameters y/z as shown in Fig. 5(a), the missing element calculation unit 21 may be configured to use Formula (3) shown in Fig. 5(b) to calculate the given value $\alpha$ (=y=z). Specifically, the missing element calculation unit 21 may be configured to calculate the given value $\alpha$ (=y=Z) to be inserted into the element D2 by using an element of an off-diagonal term in the calculated interference-signal covariance matrix:

[Expression 10]

$$\tilde{R}_{I+N}$$ .

As shown in Fig. 4(b), the missing element insertion unit 14 may be configured to insert $\alpha$, $\alpha^*$, $-\alpha$, or $-\alpha^*$ received from the missing element calculation unit 21 as a given value into each element D1 in the covariance matrix $R_{I+N}$ received from the covariance matrix estimation unit 13.

In this regard, the missing element insertion unit 14 may be configured to insert any one of $\alpha$, $\alpha^*$, $-\alpha$, or $-\alpha^*$ received from the missing element calculation unit 21 or "0" as a given value into each element D2 in the covariance matrix $R_{I+N}$ received from the covariance matrix estimation unit 13.

Alternatively, as shown in Fig. 5 (b), the missing element insertion unit 14 may be configured to insert a given value $\alpha$ or $\alpha^*$ into each element D2 in the covariance matrix $R_{I+N}$ received from the covariance matrix estimation unit 13.

In this regard, the missing element insertion unit 14 may be configured to insert any one of $\alpha$, $\alpha^*$, $-\alpha$, or $-\alpha^*$ received from the missing element calculation unit 21 or "0" as a given value into each element D1 in the covariance matrix $R_{I+N}$ received from the covariance matrix estimation unit 13.

In the mobile communication system according to Modification 1, any one of $\alpha$, $\alpha^*$, $-\alpha$, or $-\alpha^*$ is inserted as a given value into an inestimable element in the interference-signal covariance matrix:

[Expression 11]

$$\tilde{R}_{I+N}$$ .

Thereby, appropriate reception processing can be performed using the CRS-based estimation method for the covariance matrix $R_{I+N}$.

(Modification 2)

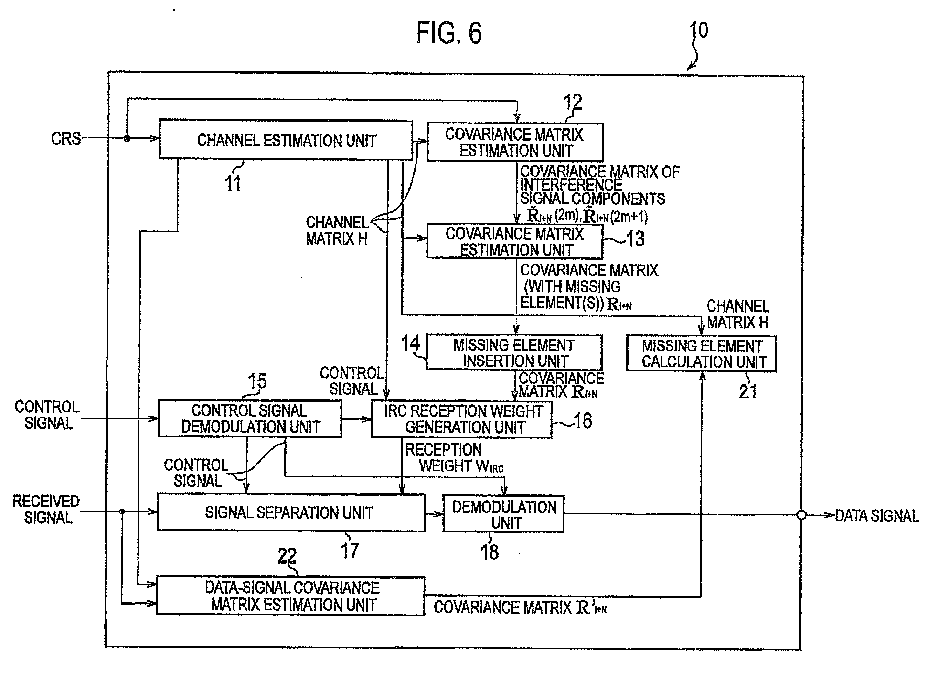

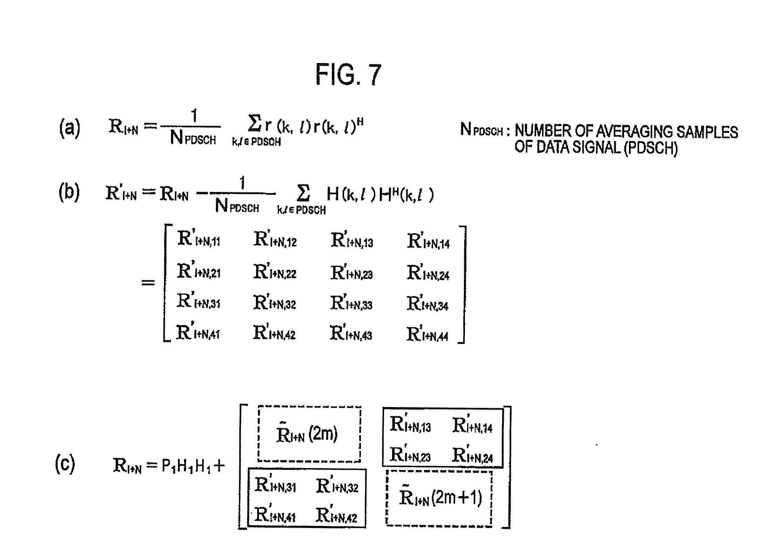

With reference to Figs. 6 and 7, an IRC receiver 10 according to Modification 2 of the present invention is described. The IRC receiver 10 according to Modification 2 is described below, with a focus on differences from the IRC receiver 10 according to the first embodiment.

As shown in Fig. 6, the IRC receiver 10 according to Modification 2 includes a data-signal covariance matrix estimation unit 22 in addition to the configurations shown in Figs. 1 and 3.

The data-signal covariance matrix estimation unit 22 is configured to estimate the covariance matrix $R_{I+N}$ based on a received data signal according to Fig. 7(a).

Specifically, the data-signal covariance matrix estimation unit 22 is configured to estimate a data-signal covariance matrix $R'_{I+N}$ according to Fig. 7(b) by using the channel matrix H estimated by the channel estimation unit 11 and the covariance matrix $R_{I+N}$ estimated by the covariance matrix estimation unit 22.

In this regard, the missing element calculation unit 21 is configured to calculate a given value to be inserted into the inestimable element D in the data-signal covariance matrix $R'_{I+N}$ described above.

The missing element insertion unit 14 is, as shown in Fig. 7 (c), configured to insert a corresponding element in the data-signal covariance matrix $R'_{I+N}$ received from the missing element calculation unit 21, to each element D in the covariance matrix $R_{I+N}$ received from the covariance matrix estimation unit 13, i.e., the elements D in Fig. 2(a).

In this way, a value of a corresponding element in a covariance matrix estimated by other method (e.g., the data-signal covariance matrix $R'_{I+N}$) is inserted into an inestimable element in the covariance matrix $R_{I+N}$. Thereby, appropriate reception processing can be performed using the CRS-based estimation method for the covariance matrix $R_{I+N}$.

Although the number of antennas of the IRC receiver 10 is "two" in the above embodiment as an example, the present invention can be implemented irrespective of the number of antennas of the IRC receiver 10.

Aspects of the present embodiment described above may be expressed as follows.

A first aspect of the present embodiment is summarized as an IRC receiver 10 configured to receive a data signal, a control signal, and a CRS (cell-specific reference signal) transmitted using an SFBC scheme, the IRC receiver 10 including: a covariance matrix estimation unit 12/13 configured to estimate a covariance matrix $R_{I+N}$ based on the CRS; a missing element insertion unit 14 configured to insert a given value into an inestimable element D in an interference-signal covariance matrix:

[Expression 12]

$$\tilde{R}_{I+N}$$

of interference signal components contained in the estimated covariance matrix $R_{I+N}$; an IRS reception weight generation unit 16 configured to generate an IRC reception weight $W_{IRC}$ by using the control signal and the covariance matrix $R_{I+N}$ having the given value inserted thereinto; and a signal separation unit 17 configured to separate the data signal from a received signal by using the generated IRC reception weight and the control signal.

In the first aspect of the present embodiment, the missing element insertion unit 14 may be configured to insert a fixed value "0" as the given value.

In the first aspect of the present embodiment, the missing element insertion unit 14 may be configured to insert, as the given value, a value $\alpha$, $\alpha^*$, $-\alpha$, or $-\alpha^*$ calculated based on an estimable element in the interference-signal covariance matrix:

[Expression 13]

$$\tilde{R}_{I+N} \ .$$

In the first aspect of the present embodiment, the IRC receiver 10 may further include a data-signal covariance matrix estimation unit 22 configured to estimate a covariance matrix:

[Expression 13A]

$$R'_{I+N}$$

based on the data signal received, and the missing element insertion unit 21 may be configured to insert, as the given value, a corresponding element in the covariance matrix:

[Expression 13B]

$$R'_{I+N}$$

estimated by the data-signal covariance matrix estimation unit 22 into each element D in the covariance matrix $R_{I+N}$ received from the covariance matrix estimation unit 13.

It should be noted that the foregoing operations of the IRC receiver 10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the IRC receiver 10. Otherwise, the storage medium and the processor may be provided as discrete components inside the IRC receiver 10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2011-242917 (filed on November 4, 2011) is incorporated by reference in the present specification.

## INDUSTRIAL APPLICABILITY

As described above, the present invention can provide a receiver capable of performing appropriate reception processing by using a CRS-based estimation method for a covariance matrix $R_{I+N}$.

## EXPLANATION OF THE REFERENCE NUMERALS

| | |
|---|---|
| 10 | IRC receiver |
| 11 | channel estimation unit |
| 12, 13 | covariance matrix estimation unit |
| 14 | missing element insertion unit |
| 15 | control signal demodulation unit |
| 16 | IRC reception weight generation unit |

17         signal separation unit
18         demodulation unit
21         missing element calculation unit
22         data-signal covariance matrix estimation unit

**Claims**

1.  A receiver configured to receive a data signal, a control signal, and a cell-specific reference signal transmitted using a space frequency block coding scheme, the receiver comprising:

    a covariance matrix estimation unit configured to estimate a covariance matrix based on the cell-specific reference signal;
    a missing element insertion unit configured to insert a given value into an inestimable element in an interference-signal covariance matrix of interference signal components contained in the estimated covariance matrix;
    a reception weight generation unit configured to generate a reception weight by using the control signal and the covariance matrix having the given value inserted thereinto; and
    a signal separation unit configured to separate the data signal from a received signal by using the control signal and the generated reception weight.

2.  The receiver according to claim 1, wherein the missing element insertion unit is configured to insert a fixed value "0" as the given value.

3.  The receiver according to claim 1, wherein the missing element insertion unit is configured to insert, as the given value, a value calculated based on an estimable element in the interference-signal covariance matrix.

4.  The receiver according to claim 1, further comprising a data-signal covariance matrix estimation unit configured to estimate a covariance matrix based on the data signal received, wherein the missing element insertion unit is configured to insert, as the given value, a corresponding element in the covariance matrix estimated by the data-signal covariance matrix estimation unit.

# FIG. 1

CRS → **CHANNEL ESTIMATION UNIT** (11)

**COVARIANCE MATRIX ESTIMATION UNIT** (12)

COVARIANCE MATRIX OF INTERFERENCE SIGNAL COMPONENTS $\bar{R}_{I+N}(2m), \bar{R}_{I+N}(2m+1)$

CHANNEL MATRIX H

**COVARIANCE MATRIX ESTIMATION UNIT** (13)

COVARIANCE MATRIX (WITH MISSING ELEMENT(S)) $\tilde{R}_{I+N}$

**MISSING ELEMENT INSERTION UNIT** (14)

COVARIANCE MATRIX $R_{I+N}$

CONTROL SIGNAL

CONTROL SIGNAL → **CONTROL SIGNAL DEMODULATION UNIT** (15)

**IRC RECEPTION WEIGHT GENERATION UNIT** (16)

RECEPTION WEIGHT $W_{IRC}$

CONTROL SIGNAL

RECEIVED SIGNAL → **SIGNAL SEPARATION UNIT** (17) → **DEMODULATION UNIT** (18) → DATA SIGNAL

(10)

EP 2 775 645 A1

FIG. 2

FIG. 3

## FIG. 4

**(a)**

$$R_{I+N} = P_1 H_1 H_1^{\dagger} + \tilde{R}_{I+N}$$

$$= P_1 H_1 H_1^{\dagger} + \tilde{R}_{I+N}$$

$$\begin{bmatrix} E[\tilde{r}_1^*(2m)\,\tilde{r}_1^*(2m)] & \boxed{x^*} \\ \boxed{-x} & E[\tilde{r}_1(2m)\,\tilde{r}_1(2m+1)] \end{bmatrix}$$

$$\tilde{R}_{I+N}(2m)$$

$$E[\tilde{r}_2^*(2m+1)\,\tilde{r}_2^*(2m)]$$

$$\begin{bmatrix} E[\tilde{r}_1(2m)\,\tilde{r}_1(2m+1)] & \boxed{x} \\ \boxed{-x^*} & E[\tilde{r}_2(2m)\,\tilde{r}_2(2m+1)] \end{bmatrix}$$

$$\tilde{R}_{I+N}(2m+1)$$

D1  D2

MISSING ELEMENT IS EXPRESSED WITH SINGLE PARAMETER x

**(b)**

$$R_{I+N} = P_1 H_1 H_1^{\dagger} + \tilde{R}_{I+N}$$

$$= P_1 H_1 H_1^{\dagger} + \tilde{R}_{I+N}$$

$$\begin{bmatrix} E[\tilde{r}_1^*(2m)\,\tilde{r}_1^*(2m)] & \boxed{\alpha^*} \\ \boxed{-\alpha} & E[\tilde{r}_1(2m)\,\tilde{r}_1(2m+1)] \end{bmatrix}$$

$$\tilde{R}_{I+N}(2m)$$

$$E[\tilde{r}_2^*(2m+1)\,\tilde{r}_2^*(2m)]$$

$$\begin{bmatrix} E[\tilde{r}_1(2m)\,\tilde{r}_1(2m+1)] & \boxed{\alpha} \\ \boxed{-\alpha^*} & E[\tilde{r}_2(2m)\,\tilde{r}_2(2m+1)] \end{bmatrix}$$

$$\tilde{R}_{I+N}(2m+1)$$

D1  D2

$$\alpha = E\left[\tilde{r}_1^*(2m)\,\tilde{r}_2^*(2m)\right] = \frac{1}{N_{sp}}\sum_{k,\,l\,\in\,CRS} \tilde{r}_1(k,\,l)\,\tilde{r}_2^*(k,\,l) \quad -(3)$$

# FIG. 5

(a)

$R_{I+N} = P_1 H_1 H_1 + \tilde{R}_{I+N}$

$= P_1 H_1 H_1 +$ [ ... ]

MISSING ELEMENT IS EXPRESSED WITH TWO PARAMETERS y, x

(b)

$R_{I+N} = P_1 H_1 H_1 + \tilde{R}_{I+N}$

$= P_1 H_1 H_1 +$ [ ... ]

$$\alpha = E\left[\tilde{r}_1(2m)\,\tilde{r}_2{}^*(2m)\right] = \frac{1}{N_{sp}} \sum_{k,l \in CRS} \tilde{r}_1(k,l)\,\tilde{r}_2{}^*(k,l) \quad -(3)$$

EP 2 775 645 A1

## FIG. 6

EP 2 775 645 A1

# FIG. 7

(a) $\quad R_{I+N} = \dfrac{1}{N_{PDSCH}} \displaystyle\sum_{k,l \,\in\, PDSCH} r(k,l)\,r(k,l)^{H}$

$N_{PDSCH}$ : NUMBER OF AVERAGING SAMPLES OF DATA SIGNAL (PDSCH)

(b) $\quad R'_{I+N} = R_{I+N} - \dfrac{1}{N_{PDSCH}} \displaystyle\sum_{k,l \,\in\, PDSCH} H(k,l)\,H^{H}(k,l)$

$$= \begin{bmatrix} R'_{I+N,11} & R'_{I+N,12} & R'_{I+N,13} & R'_{I+N,14} \\ R'_{I+N,21} & R'_{I+N,22} & R'_{I+N,23} & R'_{I+N,24} \\ R'_{I+N,31} & R'_{I+N,32} & R'_{I+N,33} & R'_{I+N,34} \\ R'_{I+N,41} & R'_{I+N,42} & R'_{I+N,43} & R'_{I+N,44} \end{bmatrix}$$

(c) $\quad R_{I+N} = P_1 H_1 H_1 + \begin{bmatrix} \tilde{R}_{I+N}(2m) & \begin{matrix} R'_{I+N,13} & R'_{I+N,14} \\ R'_{I+N,23} & R'_{I+N,24} \end{matrix} \\ \begin{matrix} R'_{I+N,31} & R'_{I+N,32} \\ R'_{I+N,41} & R'_{I+N,42} \end{matrix} & \tilde{R}_{I+N}(2m+1) \end{bmatrix}$

# FIG. 8

(a)

INTERFERENCE SIGNAL TO IRC RECEIVER 10

Precoding beam #1 FOR UE #1 CONNECTED TO OTHER CELL

Precoding beam #2 FOR UE #2 CONNECTED TO OTHER CELL

eNB#1

UE#1

eNB#2

UE#2

NULL-FORMING FOR INTERFERENCE SIGNAL

DESIRED SIGNAL TO IRC RECEIVER 10

10 IRC RECEIVER

(b)

FREQUENCY

RB BAND (12 SUBCARRIERS)

CRS

DATA SIGNAL

CONTROL SIGNAL

1 SUBFRAME (14 OFDM SYMBOLS)

TIME

EP 2 775 645 A1

# FIG. 9

**FIG. 10**

(a)

RECEIVED SIGNAL FOR EVEN-NUMBERED RE OF SFBC PAIR

$$r_1(2m) = h_{11,1}s_1(2m) + h_{12,1}s_1(2m+1) + h_{11,2}s_2(2m) + h_{12,2}s_2(2m+1) + n_1(2m)$$

$$r_2(2m) = h_{21,1}s_1(2m) + h_{22,1}s_1(2m+1) + h_{21,2}s_2(2m) + h_{22,2}s_2(2m+1) + n_2(2m)$$

RECEIVED SIGNAL FOR ODD-NUMBERED RE OF SFBC PAIR

$$r_1^*(2m+1) = h_{12,1}^*s_1(2m) - h_{11,1}^*s_1(2m+1) + h_{12,2}^*s_2(2m) - h_{11,2}^*s_2(2m+1) + n_1(2m+1)$$

$$r_2^*(2m+1) = h_{22,1}^*s_1(2m) - h_{21,1}^*s_1(2m+1) + h_{22,2}^*s_2(2m) - h_{21,2}^*s_2(2m+1) + n_2(2m+1)$$

(b)

$$\begin{bmatrix} r_1(2m) \\ r_2(2m) \\ r_1^*(2m+1) \\ r_2^*(2m+1) \end{bmatrix} = \begin{bmatrix} h_{11,1} & h_{12,1} \\ h_{21,1} & h_{22,1} \\ h_{12,1}^* & -h_{11,1}^* \\ h_{22,1}^* & -h_{21,1}^* \end{bmatrix} \begin{bmatrix} s_1(2m) \\ s_1(2m+1) \end{bmatrix} + \begin{bmatrix} h_{11,2} & h_{12,2} \\ h_{21,2} & h_{22,2} \\ h_{12,2}^* & -h_{11,2}^* \\ h_{22,2}^* & -h_{21,2}^* \end{bmatrix} \begin{bmatrix} s_2(2m) \\ s_2(2m+1) \end{bmatrix} + \begin{bmatrix} n_1(2m) \\ n_2(2m) \\ n_1(2m+1) \\ n_2(2m+1) \end{bmatrix}$$

(c)

$$r(m) = H_1 s_1(m) + H_2 s_2(m) + n(m)$$

m : SFBC SYMBOL NUMBER→m VALUE DETERMINES SUBCARRIER k AND OFDM SYMBOL NUMBER

$r_i(2m), r_i(2m+1)$ : RECEIVED SIGNALS BY i-TH RECEIVING ANTENNA FOR EVEN-NUMBERED AND ODD-NUMBERED REs OF SFBC PAIR

$n_i(2m), n_i(2m+1)$ : INTERFERENCE SIGNALS BY i-TH RECEIVING ANTENNA FOR EVEN-NUMBERED AND ODD-NUMBERED REs OF SFBC PAIR

$s_q(2m), s_q(2m+1)$ : TRANSMITTED SIGNALS FOR EVEN-NUMBERED AND ODD-NUMBERED REs OF SFBC PAIR IN q-TH CELL

$h_{ij,q}$ : CHANNEL ESTIMATION VALUE FOR i-TH RECEIVING ANTENNA, j-TH TRANSMITTING ANTENNA, AND q-TH CELL

# FIG. 11

(a)
$$W_{IRC}(k, l) = H_1^H(k, l) R_{I+N}^{-1}$$

(b)
$$R_{I+N} = \underbrace{P_1 H_1(k, l) H_1^H(k, l)}_{A} + \underbrace{\frac{1}{N_{sp}} \sum_{k, l \in CRS} \tilde{r}(k, l) \tilde{r}(k, l)^H}_{B} \quad \tilde{r}(k, l) = r(k, l) - H_1(k, l) d_1(k, l)$$

DEFINED AS $\tilde{R}_{I+N} \rightarrow$ COVARIANCE MATRIX OF INTERFERENCE SIGNAL COMPONENTS

$k$ : SUBCARRIER INDEX   $H_1$ : CHANNEL MATRIX FOR CONNECTED CELL   $N_{sp}$ : NUMBER OF AVERAGING SAMPLES
$l$ : OFDM SYMBOL INDEX   $r$ : RECEIVED SIGNAL VECTOR   $H$ : HERMITIAN TRANSPOSITION
$W_{IRC}$ : IRC RECEPTION WEIGHT MATRIX   $d_1$ : RS SIGNAL VECTOR OF CONNECTED CELL
$P_1$ : TRANSMISSION POWER OF CONNECTED CELL

## FIG. 12

FREQUENCY ↑

SERVING CELL #1

→ TIME

INTERFERENCE CELL #1

INTERFERENCE CELL #2

SFBC PAIR

- EXTRACT INTERFERENCE SIGNAL COMPONENT BASED ON CRSs
- ONLY INTERFERENCE FROM EVEN-NUMBERED REs (REs SHOWN WITH ▦) OF SFBC PAIRS IN INTERFERING CELL (or CRS INTERFERENCE) IS EXTRACTED

$$\begin{cases} \tilde{r}_1(k,l) = r_1(k,l) - (\hat{h}_{11,1}d_1(k,l)) + h_{12,1}d_2(k,l)) & \rightarrow \text{SIGNAL RECEIVED BY RECEIVING ANTENNA \#1} \\ \tilde{r}_2(k,l) = r_2(k,l) - (\hat{h}_{21,1}d_1(k,l)) + h_{22,1}d_2(k,l)) & \rightarrow \text{SIGNAL RECEIVED BY RECEIVING ANTENNA \#2} \end{cases}$$

CHANNEL ESTIMATION VALUE BASED ON CRS

$$\tilde{R}_{I+N}(2m) = \frac{1}{N_{sp}} \sum_{k,l \in CRS} \begin{bmatrix} \tilde{r}_1(k,l) \\ \tilde{r}_2(k,l) \end{bmatrix} \begin{bmatrix} \tilde{r}_1(k,l) \\ \tilde{r}_2(k,l) \end{bmatrix}^{''}$$

$$= \frac{1}{N_{sp}} \sum_{k,l \in CRS} \begin{bmatrix} |\tilde{r}_1(k,l)|^2 & \tilde{r}_1(k,l)\tilde{r}_2^*(k,l) \\ \tilde{r}_2(k,l)\tilde{r}_1^*(k,l) & |\tilde{r}_2(k,l)|^2 \end{bmatrix} \quad \cdots (1)$$

DUE TO PROPERTY SUCH THAT $\tilde{R}_{I+N}(2m) = \tilde{R}_{I+N}^*(2m+1)$,

$$\tilde{R}_{I+N}(2m+1) = \frac{1}{N_{sp}} \sum_{k,l \in CRS} \begin{bmatrix} |\tilde{r}_1(k,l)|^2 & \tilde{r}_1^*(k,l)\tilde{r}_2(k,l) \\ \tilde{r}_2^*(k,l)\tilde{r}_1(k,l) & |\tilde{r}_2(k,l)|^2 \end{bmatrix} \quad \cdots (2)$$

- MEANWHILE, INTERFERENCE-SIGNAL COMPONENTS FROM ODD-NUMBERED REs (REs SHOWN WITH ▨) OF SFBC PAIRS IN INTERFERING CELL CANNOT BE EXTRACTED

## FIG. 13

$$\tilde{R}_{I+N} = E\left[\tilde{r}(k,l)\,\tilde{r}^H(k,l)\right] \quad\longleftarrow\quad \boxed{E[\ ] : \text{AVERAGING PROCESSING}}$$

$$= E\left[\begin{bmatrix} \tilde{r}_1(2m) \\ \tilde{r}_2(2m) \\ \tilde{r}_1^*(2m+1) \\ \tilde{r}_2^*(2m+1) \end{bmatrix} \begin{bmatrix} \tilde{r}_1(2m) \\ \tilde{r}_2(2m) \\ \tilde{r}_1^*(2m+1) \\ \tilde{r}_2^*(2m+1) \end{bmatrix}^H\right]$$

$$= E\left[\begin{array}{cccc} |\tilde{r}_1(2m)|^2 & \tilde{r}_1(2m)\tilde{r}_2^*(2m) & \tilde{r}_1(2m)\tilde{r}_1(2m+1) & \tilde{r}_1(2m)\tilde{r}_2(2m+1) \\ \tilde{r}_2(2m)\tilde{r}_1^*(2m) & |\tilde{r}_2(2m)|^2 & \tilde{r}_2(2m)\tilde{r}_1(2m+1) & \tilde{r}_2(2m)\tilde{r}_2(2m+1) \\ \tilde{r}_1^*(2m+1)\tilde{r}_1^*(2m) & \tilde{r}_1^*(2m+1)\tilde{r}_2^*(2m) & |\tilde{r}_1(2m+1)|^2 & \tilde{r}_1^*(2m+1)\tilde{r}_2(2m+1) \\ \tilde{r}_2^*(2m+1)\tilde{r}_1^*(2m) & \tilde{r}_2^*(2m+1)\tilde{r}_2^*(2m) & \tilde{r}_2^*(2m+1)\tilde{r}_1(2m+1) & |\tilde{r}_2(2m+1)|^2 \end{array}\right]$$

$$= \left[\begin{array}{cc} \tilde{R}_{I+N}(2m) & \begin{array}{c} E[\tilde{r}_1(2m)\tilde{r}_1(2m+1)] \\ E[\tilde{r}_2(2m)\tilde{r}_1(2m+1)] \end{array} \quad \begin{array}{c} E[\tilde{r}_1(2m)\tilde{r}_2(2m+1)] \\ E[\tilde{r}_2(2m)\tilde{r}_2(2m+1)] \end{array} \\[2em] \begin{array}{c} E[\tilde{r}_1^*(2m+1)\tilde{r}_1^*(2m)] \\ E[\tilde{r}_2^*(2m+1)\tilde{r}_1^*(2m)] \end{array} \quad \begin{array}{c} E[\tilde{r}_1^*(2m+1)\tilde{r}_2^*(2m)] \\ E[\tilde{r}_2^*(2m+1)\tilde{r}_2^*(2m)] \end{array} & \tilde{R}_{I+N}(2m+1) \end{array}\right]$$

C

| INTERNATIONAL SEARCH REPORT | International application No. |
|---|---|
| | PCT/JP2012/078471 |

A.  CLASSIFICATION OF SUBJECT MATTER
*H04J99/00*(2009.01)i, *H04B7/02*(2006.01)i, *H04B7/04*(2006.01)i, *H04J11/00*
(2006.01)i

According to International Patent Classification (IPC) or to both national classification and IPC

B.  FIELDS SEARCHED

Minimum documentation searched (classification system followed by classification symbols)
H04J99/00, H04B7/02, H04B7/04, H04J11/00

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)
IEEE Xplore, CiNii

C.  DOCUMENTS CONSIDERED TO BE RELEVANT

| Category* | Citation of document, with indication, where appropriate, of the relevant passages | Relevant to claim No. |
|---|---|---|
| A | Renesas Mobile Europe Ltd., Interference aware receiver modeling at system level, 3GPP TSG-RAN WG1#65, R1-111562, 2011.05.09 | 1-4 |
| A | NTT DOCOMO, Reference receiver structure for interference mitigation on Enhanced performance requirement for LTE UE, 3GPP TSG-RAN WG4#60Bis, R4-115213, 2011.10.10 | 1-4 |
| A | NTT DOCOMO, Influence of Channel Estimation Error on MMSE-IRC Receiver, 3GPP TSG-RAN WG1#65, R1-111639, 2011.05.09 | 1-4 |

| ☒   Further documents are listed in the continuation of Box C. | ☐   See patent family annex. |
|---|---|

*     Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 06 December, 2012 (06.12.12) | 18 December, 2012 (18.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/078471 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | Yusuke OWATARI, Nobuhiko MIKI, Takahiro ASAI, Tetsushi ABE, Hidekazu TAOKA, "Investigation of Interference Rejection Combining Receiver to Suppress Inter-cell Interference in LTE-Advanced Downlink", IEICE Technical Report, 14 July 2011 (14.07.2011), RCS2011-80 | 1-4 |
| A | Yusuke OWATARI, Nobuhiko MIKI, Tetsushi ABE, Hidekazu TAOKA, "Investigation on Interference Rejection Combining Receiver in Asynchronous Network for LTE-Advanced Downlink", IEICE Technical Report, 19 October 2011 (19.10.2011), RCS2011-186 | 1-4 |
| A | Yusuke Ohwatari, Nobihiko Miki, Takahiro Asai, Tetsushi Abe, Hidekazu Taoka, Performance of Advanced Receiver Employing Interference Rejection Combining to Suppress Inter-Cell Interference in LTE-Advanced Downlink, Vehicular Technology Conference (VTC Fall), 2011 IEEE, 2011.09.05 | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242917 A